Europäisches Patentamt

(19) European Patent Office

Office européen des brevets

(11) Publication number: **0 036 844**
**A1**

(12) # EUROPEAN PATENT APPLICATION

(21) Application number: 81830030.3

(22) Date of filing: 02.03.81

(51) Int. Cl.³: **B 29 C 17/07**

(30) Priority: 21.03.80 IT 2080780

(43) Date of publication of application: 30.09.81
Bulletin 81/39

(84) Designated Contracting States: DE FR GB

(71) Applicant: Geo, Borrini, Via Paisiello, 28, I-20131 Milano
(IT)

(72) Inventor: Geo, Borrini, Via Paisiello, 28, I-20131 Milano
(IT)

(74) Representative: Zini, Alessandro, Ufficio Tecnico
Internazionale Brevetti Ing. Alessandro Zini Piazza
Castello 1, I-20121 Milano (IT)

(54) **Method of manufacturing plastic containers by blow molding without any waste and machine for carrying out said method.**

(57) A container of thermoplastic material is obtained starting from a parison (23) coming down vertically from an extruder (9) and squeezed in a transverse direction at a suitable position thereof, once it has reached the required length, by jaws (10), so that its side walls weld to each other along a line, thus providing beneath the jaws (10) a workpiece generally in the form of a hollow cylinder having the upper end closed. At this time a blade (11) severs the workpiece so obtained from the parison (23) above the jaws (10), which open and drop the workpiece on a support (6) in the form of a mushroom arranged co-axially to the parison and forming a part of a blowing nozzle. The purpose of the mushroom support (6) is to support the workpiece from inside at its closed end and to transfer it, by a translation of the nozzle assembly (1), between two half molds (12) which are subsequently closed. At this time the axial stretching of the workpiece takes place due to the lifting of the mushroom member (6), and the blowing is then carried out thus providing the molecular double orientation of the thermoplastic material until the workpiece takes the shape of the mold (12). After a suitable cooling the mold (12) is open and the container is stripped therefrom, which need not be further finished because no waste of any kind is involved in the method.

ACTORUM AG

- 1 -

Method of manufacturing plastic containers by blow
molding without any waste and machine for carrying
out said method

The present invention relates to a method of manufacturing hollow plastic containers or bodies by blow molding
and to a machine for carrying out said method.

Machines producing plastic containers by extrusion and
blow molding are known.

This method has the disadvantage that the containers
undergo both in the neck and bottom portion of the container a waste which weights up to 30% upon the weight of
the raw material used. For some types of materials recovery of said waste is not allowed. In any case the waste
weights, even if it is recovered, sensibly upon the cost
of the finished product.

These machines imply, in addition, a shifting of the heavy
and cumbersome molds between the manufacturing steps.

Machines producing plastic containers by injection and
blow molding are also known.

These machines, while producing plastic containers without
waste, are however uneconomical because of the intrinsic
slowness of the manufacturing process and as a result the output is poor. In addition, these machines involve a high cost for the molds inasmuch as two different molds are required for each working cycle: the one for obtaining, by injection, the preform and the other for the final forming, by blow molding, of the containers.

It is the object of the present invention to obviate the above mentioned disadvantages of the prior art machines for manufacturing containers and thus to obtain containers which, besides not involving waste, are manufactured with a high output.

More particularly the method of manufacturing plastic containers according to the invention is characterized in that it comprises the steps of obtaining a preform from a plastic parison coming out vertically from an extruder, introducing the preform when it is still hot in a mold and blowing air inside the preform to cause it to expand to the mold configuration.

This method has the advantage, with respect to the prior art extrusion and blow molding method, that it effects the severance of the extruded preform to be blown from the remaining parison coming out from the extruder, outside the mold, this avoiding the formation of deadheads which are unavoidably formed when the mold acts simultaneously as a severing tool for the preform to be blown from the remaining extruded parison.

The method according to the invention has in addition the advantage that it does not require the shifting of heavy and cumbersome molds, since the mold is stationary and it is the preform to be blown which is brought from the extruder

- 3 -                                    0036844

to the mold.

With respect to the injection and blow molding method, the method according to the invention has the advantage that it does not require an injection molding machine with the attendant mold, which adds to the blowing mold, since the preform is obtained from a conventional extruded parison.

The machine for carrying out the method according to the invention comprises a support movable in an axial and transverse direction which is driven by a piston, said support having at its top a surface adapted to support the preform and being movable in a transverse direction between a position coaxial to the extruder and a position coaxial to a stationary blowing mold, and a welding and cutting device arranged beneath the extruder and adapted to squeeze and cut the extruded parison so as to form the preform.

The invention will be better understood from the following detailed description, given merely by way of example and therefore in no limiting sense, of an embodiment thereof, referring to the accompanying drawings in which:

Fig. 1 is a vertical cross-sectional view of the machine taken along a plane including the axis of the extruder and the axis of the mold;

Fig. 2 is a horizontal cross-sectional top view of the machine of Fig. 1;

Fig. 3 is a fragmentary vertical cross-sectional view of the machine taken along the axis of the extruder, in an operation step of the machine;

Fig. 4 is a cross-sectional view similar to that of Fig. 3 in a second operation step of the machine;

Fig. 5 is a cross-sectional view similar to that of Fig. 3 in a third operation step of the machine;

Fig. 6 is a fragmentary vertical cross-sectional view taken along the axis of the mold, in a fourth operation step of the machine;

Fig. 7 is a cross-sectional view similar to that of Fig. 6, in a fifth operation step of the machine;

Fig. 8 is a cross-sectional view similar to that of Fig. 6, in a sixth operation step of the machine;

Fig. 9 is a vertical cross-sectional view of the container after the opening of the mold; and

Fig. 10 is a cross-sectional view similar to that of Fig. 9 in a further operation step of the machine.

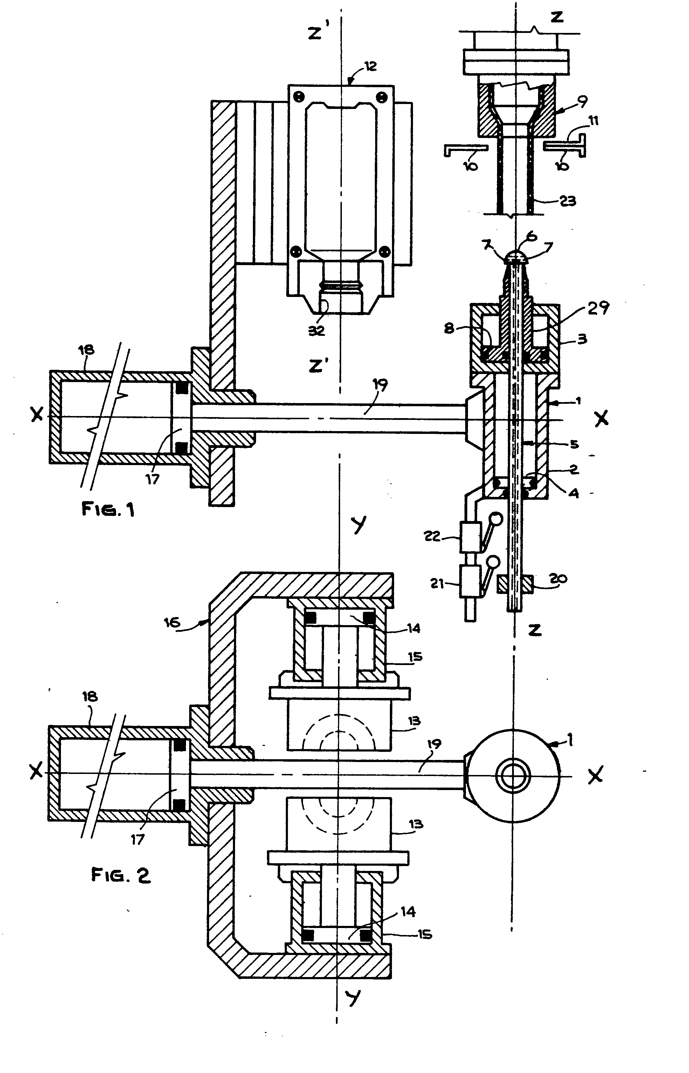

Referring to Figs. 1 and 2, it is shown that the machine consists of an assembly 1 comprising a first cylinder 2 and a second cylinder 3 integral therewith. The first cylinder has inside a piston 4 integral with a rod 5 which is hollow axially and coaxial to the cylinder 2, which rod bears on its top end a mushroom head 6 provided with orifices 7 communicating with the axial bore of the rod. The second cylinder has inside a piston 8 integral with a hollow rod 29 receiving internally the rod 5. The latter can move vertically both with respect to the piston 8 and the cylinders 2 and 3. An extruder 9 is arranged coaxially to the rod 5 above it. Provided beneath the extruder are jaws 10 movable horizontally in either direction, on whose upper face is arranged in contact therewith a blade 11 slidable horizontally thereon. The machine comprises also a mold 12 consisting of two half molds 13 (see Fig. 2) which can close and open in the direction of the axis Y-Y, each of which is integral with a piston 14 contained in a cylinder 15 secured to the housing 16 of the machine. A piston 17 of a cylinder 18 secured to the housing 16 of of the machine is integral with a rod 19 in turn integral with the assembly 1. A ring nut 20 arranged on the rod 5 and adjustable thereon is adapted to control in its movement in the direction of the axis Z-Z two microswitches 21 and 22.

There will be described now, with reference to the accompanying drawings, the operation of this machine during a whole cycle.

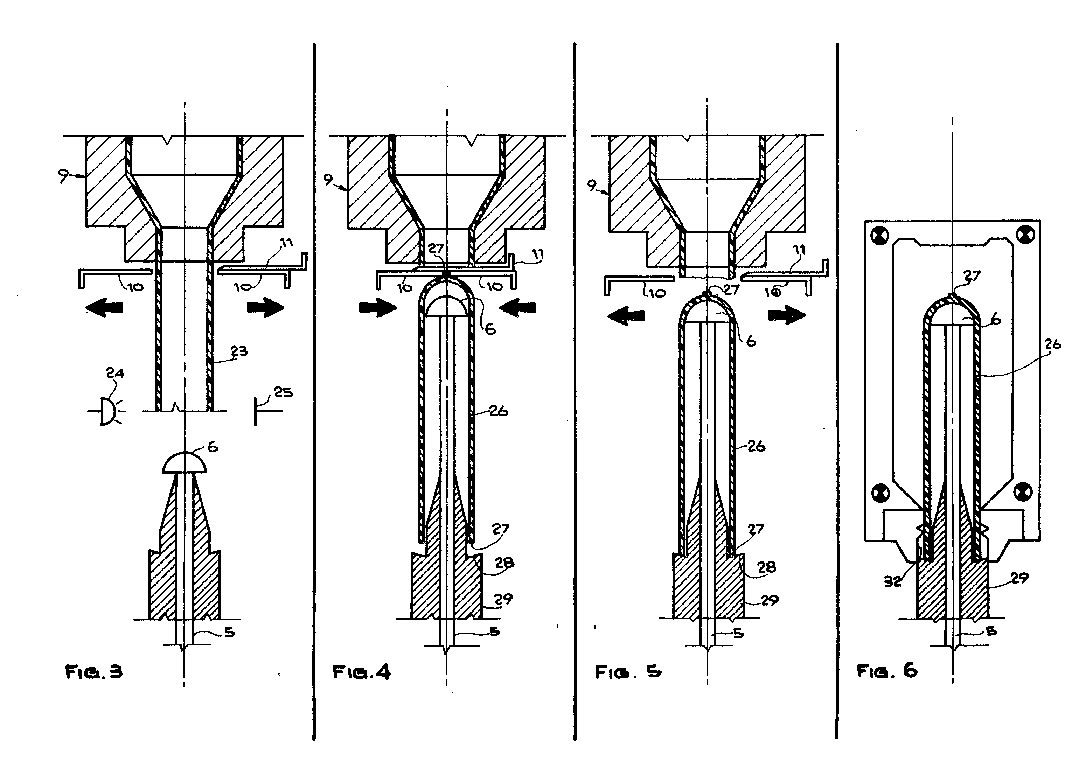

From the head of the extruder 9 comes down vertically a plastic parison 23 (see Figs. 1 and 3) which, when the required length is reached, intercepts a light beam emitted by a source 24 (see Fig. 3) which, since in that position of the extruded parison is no longer picked up by the photocell 25, causes the two jaws 10 to close. The jaws squeeze the extruded parison in a direction transverse to its axis at a suitable section of the parison, so that its opposite walls weld together (see Fig. 4) providing beneath the jaws a workpiece generally in the form of a hollow cylinder having the upper end closed, which will be referred to as preform and indicated with the reference numeral 26. Immediately after the closure of the jaws the blade 11 severs the preform 26 from the upper portion of the parison, as is seen in Fig. 4. Simultaneously the piston 4 is actuated which rested until that time on the bottom of the cylinder 2 (Fig. 1) causing the rod 5 to lift, whose mushroom upper end 6 stops, inside the preform 26, close to its upper closed surface (Fig. 4) due to the microswitch 21 actuated by the ring nut 20 carried by the rod 5. At this step the preform 26 is still retained at its appendix 27 resulting from the squeeze and cut of the parison, by the jaws 10 in a closed position although it has been already severed from the parison above the jaws. Thereafter tha jaws 10 open and return together with the blade 11, in their starting position, causing the preform 26 to fall on the mushroom head 6 which bears it from inside at its closed end, as is seen in Fig. 5, in which is seen that also the lower end 27' of the preform rests on an abutment 28 on a rod 29 of the piston 8.

At this time the piston 17 in the cylinder 18 is actuated which moves from the right end of the cylinder 18 to the left end of the same cylinder causing to move in the direction of the axis X-X also the assembly 1 connected to the piston by means of the rod 19. This operation permits it to bring the preform 26 from a position at the axis Z-Z of the extruder (see Fig. 1) to a position coaxial to the axis Z'-Z' of the mold.

Upon translation of the assembly 1 the pistons 14 of the cylinder 15, which were up to this time in a position such as to keep the mold open, are actuated so as to bring the half molds 13 closer to each other and cause the mold which contains now the preform to close (see Fig. 6).

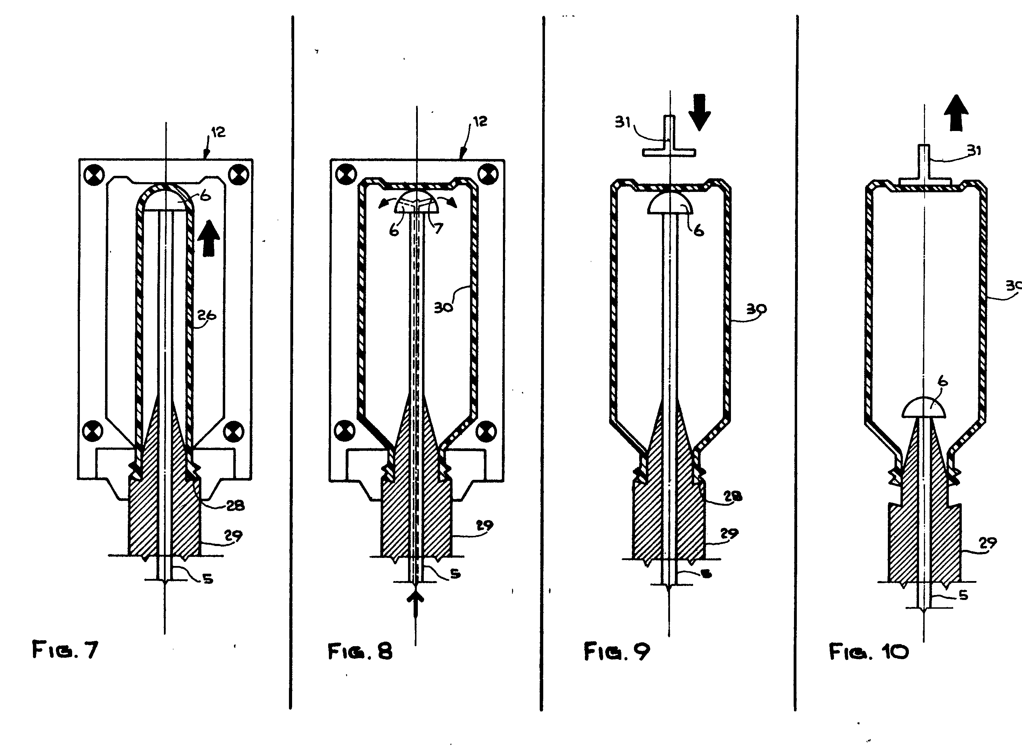

The actuation of the piston 8 which was resting up to this time on the bottom of the cylinder 3, causes the rod 29 to lift which rod stops in a position corresponding to the maximum stroke of the piston 8. This operation permits it to form the neck of the container in cooperation with a contoured seat 32 suitably provided in the mold. Simultaneously the piston 4 of the cylinder 2, which was in the position corresponding to the actuation of the microswitch 21, is again actuated so as to cause the mushroom head 6 to rise further until the ring nut 20 causes the microswitch to trip which causes the mushroom head 6 to stop in such a position that the upper end of the preform 26 skims the top of the mold 12. In this step, therefore, the axial stretching of the preform is effected as can be seen in Fig. 7.

The next step consists of blowing in air from inside the preform which is closed now also at the lower end. Air is blown in through the axial hole in the rod 5 which communicates with the openings 7 on the mushroom head 6 causing the preform 26 to expand until it takes the configuration of the mold 12 as can be seen in Fig. 8.

After a suitable cooling of the mold so as to cause the container 30 so obtained to harden, as is well known to those skilled in the art, the mold is open by actuating the pistons 14 which return in their starting position causing the half molds 13 to move apart from each other and thus to release the container 30 which, however, is still supported by the neck portion of the rod 29 by means of the abutment 28 and, at its bottom, by the mushroom head 6 as is seen in Fig. 9. A suitable device, such as a sucker 31, removes now the container so obtained from the rod 29 and deposits it in a suitable place, whereas the actuation of the piston 4 of the cylinder 2 causes the mushroom head to lower which returns in its starting position corresponding to the lowermost position of the piston 4 in the cylinder 2. Simultaneously, the piston 8 of the cylinder 3 returns also in its starting position and as a result causes also the rod 29 to lower.

The actuation of the piston 17 of the cylinder 18 permits it finally to bring back the assembly 1 in its starting position coaxial to the extruder 9 , thus completing the cycle.

From the foregoing detailed description it is seen that the machine illustrated has a number of substantial advantages with respect to the prior art machines. Its method of operation is in fact intermediate between that of the extrusion and blow molding machine and that of the injection and blow molding machine, thus summing the advantages of and eliminating in addition the known above mentioned disadvantages of these two types of machines.

The higher output and the better quality obtainable on the final product, which in addition undergoes no waste of any type, is due to the fact that, unlike what occurs in the prior art machines, the moving mass is minimum and the preform 26, retained simultaneously at the top and the bottom during its translation, cannot rock inside the mold but is positively positioned on the axis of the mold. In addition, the axial stretching of the preform 26 further improves the homogeneity and uniformity of the circumferential thickness in addition to giving the container a better mechanical strength permitting it to obtain, in association to the subsequent radial expansion of the preform 26, by means of blowing, the bi-axial orientation of the material of the container.

It should be noted, in addition, that by using the machine of the present invention, the rib 27 formed outside the closed end of the preform 26 during the welding of the side walls of the parison 23, has an orientation at an angle (in the present case 90°) to the plane in which the mold 12 closes. This avoids that lines of lower mechanical strength be formed at the bottom of the container, what would instead occur in the case the plane in which the mold closes were parallel to the direction of the rib 27.

It should be also noted, that in the method illustrated it is no longer the mold which has to be moved, as opposed to what occurs in the extrusion and blow molding machines of the prior art, and the short distance between the extruder 9 and the mold 12 avoids an excessive cooling of the preform 26.

As a result of the above stated it is possible to provide a machine which is lighter and therefore more economical also from the standpoint of the power consumption.

While but one embodiment of the invention has been illustrated and described, it is obvious that a number of changes and modifications can be made therein without departing from the scope of the invention.

- 1 -                                    0036844

Claims

1. A method of manufacturing plastic containers by means of blow molding, characterized in that it comprises the steps of obtaining a preform from a plastic parison coming out vertically from an extruder, introducing the preform when it is still hot in a mold, and blowing air inside the preform to cause it to expand to the mold configuration.

2. A method as claimed in claim 1, characterized in that the preform undergoes inside the mold an axial stretching before blowing.

3. A machine for carrying out the method as claimed in claim 1 or 2, characterized in that it comprises a support movable in an axial and transverse direction which is driven by pistons, said support having at its top a surface adapted to support the preform and being movable in a transverse direction between a position coaxial to the extruder and a position coaxial to the stationary blowing mold, and a welding and cutting device arranged beneath the extruder and adapted to squeeze and cut the extruded parison so as to form the preform.

4. A machine as claimed in claim 3, characterized in that the movable support comprises a rod arranged coaxially to the extruder, beneath it, and a piston integral with a rod and movable in a first power cylinder, said cylinder being integral with the rod of a piston movable in a second power cylinder having its axis perpendicular to the axis of the first cylinder, the latter determining the axial movement of the support rod and the second cylinder determining the transverse movement of said rod.

5. A machine as claimed in claim 4, characterized in that the rod supporting the preform is axially hollow.

6. A machine as claimed in claim 4, characterized in that the rod ends at its top with a mushroom head.

7. A machine as claimed in claims 5 and 6, characterized in that the mushroom head has passages communicating with the axial hole of the rod.

8. A machine as claimed in any of claims 4 to 7, characterized in that the rod carries a stop adapted to control a microswitch which determines the position of the rod beneath the extruder during the forming step of the preform.

9. A machine as claimed in any of claims 4 to 8, characterized in that integral with the first power cylinder, coaxially thereto, is a third power cylinder inside which an axially hollow piston is movable having a hollow rod having outside the cylinder an abutment for supporting the bottom end of the preform and terminating in a contour corresponding to the shape of the neck of the container to be molded, the hole in the rod and that in the piston being aligned with each other and being crossed in sealing relationship by the rod supporting the preform so that the rod can slide with respect to the piston.

10. A machine as claimed in any of claims 3 to 9, characterized in that the welding and cutting device comprises jaws movable in a plane substantially perpendicular to the axis of the extruder, and a blade arranged above the jaw abutting them and slidable with respect to said jaws.

11. A machine as claimed in claim 9, characterized in that the bottom end of the mold is contoured so as to provide, in combination with the contour of the top portion of the rod of the piston of the third power cylinder, the neck of the container.

12. A machine as claimed in claim 11, characterized in that in the forming step of the neck of the container, the rod supporting the preform is spaced apart with its upper surface from the bottom of the mold, in order to allow, upon formation of the neck, a further movement of the rod supporting the preform to effect a stretching of the preform material before blowing.

13. A machine as claimed in claim 12, characterized in that a second microswitch is provided adapted to be actuated by the stop carried by the rod supporting the preform, which determines the end of the upward stroke of the rod.

14. A machine as claimed in any of claims 8 to 13, characterized in that the stop is adjustable in position on the rod.

0036844

FIG. 1

FIG. 2

FIG. 3

FIG. 4

FIG. 5

FIG. 6

FIG. 7

FIG. 8

FIG. 9

FIG. 10

0036844

### European Patent Office

## EUROPEAN SEARCH REPORT

EP 81 83 0030

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | US - A - 3 217 071 (C.E. PLYMALE) <br> * Whole document and in particular claim 3 and figure 5 * <br> -- | 1,3-5, 10 | B 29 C 17/67 |
| X | US - A - 3 382 532 (J. SCHWEIGER) <br> * Column 1, lines 36-45; figures * <br> -- | 1,5-7 | |
| X | FR - A - 1 505 492 (P. NATAF) <br> * Whole document and in particular claims 2 and 3 * <br> -- | 1,3,5, 6 | TECHNICAL FIELDS SEARCHED (Int. Cl.³) |
| X | US - A - 3 632 261 (J. GASIOR) <br> * Whole document.* <br> -- | 1,3-5, 8,10, 13 | B 29 C 17/00 |
| X | US - A - 3 001 239 (T.R. SANTELLI) <br> * Whole document * <br> -- | 1,3,5, 10 | |
| X | US - A - 3 550 200 (D.E. GILBERT) <br> * Whole document * <br> -- | 1,2,5, 9,11, 12 | CATEGORY OF CITED DOCUMENTS |
| X | GB - A - 2 027 635 (PLASTIC KOGAKU) <br> * Claims; figures 1-4,24,25 * <br> -- | 1,10 | X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | US - A - 2 783 503 (O.B. SHERMAN) <br> * Whole document * <br> -- ./. | 1 | |

&: member of the same patent family, corresponding document

| | The present search report has been drawn up for all claims | |
|---|---|---|
| Place of search | Date of completion of the search | Examiner |
| The Hague | 01-07-1981 | LABEEUW |

EPO Form 1503.1 06.78

0036844

Application number

EP 81 83 0030
-2-

# EUROPEAN SEARCH REPORT

European Patent Office

| Category | Citation of document with indication, where appropriate, of relevant passages | Relevant to claim |
|---|---|---|
| | FR - A - 2 401 011 (KUREHA KAGAKU)<br>* Whole document *<br>& GB - A - 2 003 081<br><br>-- | 1,2 |
| X | US - A - 3 969 060 (HEIDENREICH)<br>* Whole document and in par-<br>ticular figures 1-2 *<br><br>---- | 9,11, 12 |

CLASSIFICATION OF THE APPLICATION (Int. Cl.³)

TECHNICAL FIELDS SEARCHED (Int. Cl.³)

EPO Form 1503.2   06.78